Europäisches Patentamt

European Patent Office

Office européen des brevets

(11) Publication number: **0 413 419 A1**

# EUROPEAN PATENT APPLICATION

(21) Application number: **90306582.9**

(22) Date of filing: **15.06.90**

(51) Int. Cl.5: **G01N 27/407**

The title of the invention has been amended (Guidelines for Examination in the EPO, A-III, 7.3).

(30) Priority: **16.06.89 GB 8913867**

(43) Date of publication of application:
**20.02.91 Bulletin 91/08**

(84) Designated Contracting States:
**DE**

(71) Applicant: **NATIONAL RESEARCH DEVELOPMENT CORPORATION**

**101 Newington Causeway**
**London SE1 6BU(GB)**

(72) Inventor: **Vincent, Colin Angus**
**1 Station Brae**
**Newport-on-Tay, Fife DD6 8DG, Scotland(GB)**

(74) Representative: **Neville, Peter Warwick**
**Patent Department National Research Development Corporation 101 Newington Causeway**
**London SE1 6BU(GB)**

(54) **Electrochemical cell for sensing fluids.**

(57) A cell for sensing fluids (water, alcohol and aldehyde) is held at a potential of 2V and, on exposure, passes a current of reproducible magnitude according to the fluid content. The cell comprises a silver cathode (5), an inert electronically conductive anode (2) and a silver -iodide/silvermetal oxide (e.g $Ag_7I_4AsO_4$) solid electrolyte (4). The metal oxide is one or more of tungstate, chromate, molybdate, vanadate, borate, selenate, arsenate and phosphate.

Fig. 1.

## ELECTROCHEMICAL METHOD OF SENSING FLUIDS

This invention relates to an electrochemical method for sensing fluids which are sources of acidic hydrogen, such as water (either in the liquid phase, e.g. when present in an organic liquid, or in the vapour phase, when present in an atmosphere), an alcohol such as methanol, or an aldehyde such as formaldehyde.

According to the invention, a method for sensing fluids comprises exposing an electrochemical cell to suspected fluid, applying a potential between the electrodes of the cell and detecting or measuring the current flow, characterised in that the cell comprises in use a silver cathode, an inert electronically conductive anode and a vitreous silver-iodide/silver-oxymetal-anion electrolyte. By oxymetal anion we include (for example) tungstate, chromate, molybdate and vanadate, and also, for the purposes of this specification, borate, selenate, arsenate and phosphate, or mixtures thereof.

The invention will now be described by way of example.

Figure 1 illustrates a cell for use in a method according to the invention, and is described later, after description of examples of materials for such cells, and

Figure 2 shows results obtained from the cell of Figure 1.

The vitreous electrolyte was made as follows. Silver iodide (mainly $\gamma$) was precipitated by adding 2.5M aqueous KI to excess 2.5M aqueous $AgNO_3$ with stirring in the dark. The precipitate was washed and dried in vacuum over $P_2O_5$ in the dark.

Silver arsenate was prepared by precipitation from a 1M aqueous solution of $Na_2HAsO_4.7H_2O$ with 1M aqueous $AgNO_3$ in the dark.

The resulting brown solid was washed and dried in vacuum over $P_2O_5$ in the dark.

The electrolyte itself was prepared by melting under nitrogen an intimate mixture of the silver iodide and the silver arsenate in a molar ratio of 4:1. The melt was then cooled very rapidly by quenching in liquid nitrogen. The resulting ruby-coloured glass was ground and stored in the dark, and was the desired electrolyte viz. silver iodo-arsenate $Ag_7I_4AsO_4$.

Then, to form a cathode, 0.2 g of silver powder (particle size 2 to 100 micrometres) was mixed with 0.4 g of the ground vitreous electrolyte and pressed under 50 MPa to form a disc of diameter 10 mm. On one side of the disc, further ground vitreous electrolyte was added and the whole pressed under 100 MPa. On top of the electrolyte, to form an anode, a mixture of 0.2 g carbon powder and 0.4 g electrolyte was placed and the whole pressed under 250 MPa, to form a cylindrical cell (diameter 10 mm)
$Ag|Ag_7I_4AsO_4|C$.

An alternative cell for use according to the invention can be made by preparing the electrolyte by melting as described above, and casting it onto silver foil either in a mould or splatwise, the silver forming the cathode, or by grinding it into powder and pressing. The cathode could alternatively be evaporated silver for example; it is not critical, provided that it contributes negligible impedance to the cell, and is isolated from, or unaffected by the vapour phase changes to which the anode is responsive. As the anode, a sharp metal (not silver) wire is placed in contact with the cast electrolyte on the opposite face of the silver, or else a thick layer of powdered carbon is sintered into that opposite face, or any intermediate degree of electronic contact is made. The sensitivity increases according to this degree of anode contact, with the pointed wire contact being the least sensitive (which paradoxically can be useful in some applications) and the sintered carbon version the most sensitive. When the cell is intended for use in an industrial sensor, the anode contact area will need to be reproducible, and a convenient way of achieving this might be to press a metal mesh (e.g. stainless stell, nickel or platinum) into the surface of the soft glass using a hydraulic press. Alternatively, one might deposit an inert metal to form a consistent grid pattern on the surface of the solid electrolyte or in a mass production one might use a thin evaporated film, whose thickness will ideally allow ingress of water (probably via pores), but still provide an effective equipotential metal surface.

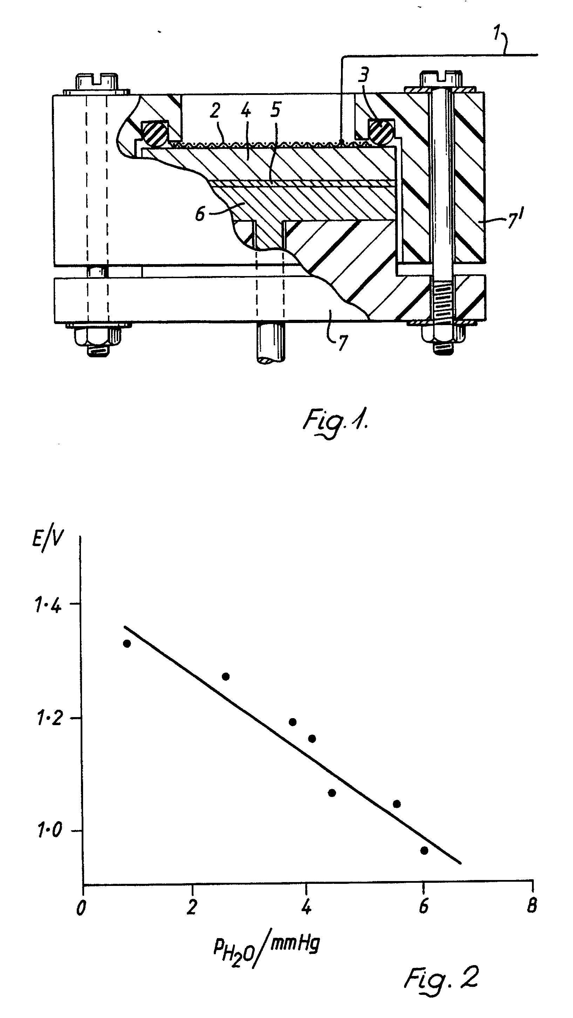

An example of a cell for use in a method according to the invention is as illustrated in Figure 1.

An anode current collector 1 is connected to a regular platinum mesh anode 2. An O-ring seal 3 protects the rest of the cell and permits a liquid sample to be placed in contact with the sensor. Pressed to the anode 2 is the silver iodo-arsenate solid electrolyte 4 as previously described. On the opposite side of the electrolyte 4 to the anode 2 is a silver cathode 5 itself pressed against a stainless steel cathode current collector 6. The cell is held together under compression by insulating annular protective members 7, 7' interconnected by screws for adjusting the compressive stress. To improve the cathode performance before use of the cell, the cell is driven with a temporary silver anode so that silver cation in the electrolyte is discharged as elemental metal in dendrite form on the silver foil cathode, so improving the intimacy of the cathode/electrolyte contact. A cheaper device would have an inexpensive inert current collector as temporary cathode, onto which silver would be electrodeposited as just described, to prepare the cell for use.

In use, the illustrated cell is maintained at a potential of 0.6 to 3 volts such as 2 volts. This cell in vacuum produces only negligible current flow because of kinetic limitations to iodide oxidation in this glass (in contrast to the situation with, say, crystalline AgI). It is then exposed to the atmosphere containing the suspected fluid, for example damp air or benzene, when it immediately passes a current, of magnitude which is reproducible according to the water content. The response time is as fast as can be measured. The sensitivity range to water vapour is from saturation down to $10^{-3}$ of saturation. If more convenient, the cell can be kept in the atmosphere, and the potential switched on only when required. Experiments have been performed to show how the current flowing in a sensor cell is affected by the water vapour pressure in the gas phase, or by the water content of an aprotic liquid in contact with the electrolyte and an inert current collector. Once a threshold potential has been exceeded, thus at say 0.8 volts, the current is a direct function of the water content of the phase in contact with the sensor. The applied potential required to produce a particular level of current (e.g. 1 microamp) in gases with different water content (expressed as partial pressure) is shown in Figure 2.

At potentials higher than that required for water decomposition, hydrogen atoms of even lower 'acidity' than in water may become usefully detectable. Conversely, at lower potentials molecules of higher acidity can be detected.

The response magnitude is different for aldehydes and alcohols and other substances, and the sensing method may therefore have analytical possibilities.

The anodic side of the cell in use becomes depleted in silver (which is believed to be replaced ion for ion by hydrogen, with silver ion migration through the solid electrolyte and silver metal deposition at the cathode) and the depletion boundary advances towards the oppositely advancing cathodic silver dendrites. When they meet, the cell is used up.

The cell reaction proposed is as follows:-

ANODE: $3/2 H_2O(g) - 3e \rightarrow 3H^+ + 3/4 + 3/4 O_2(g)$

$Ag_7I_4AsO_4(s) + 3H^+ \rightarrow \{Ag_4H_3I_4AsO_4\}(s) + 3Ag^+$

CATHODE $3Ag^+ + 3e \rightarrow 3Ag(s)$

CELL REACTION: $3/2 H_2O(g) + Ag_7I_4AsO(s) \rightarrow \{Ag_4H_3I_4AsO\}(s) + 3/4 O_2(g) + 3Ag(s)$

The magnitude of current flowing in a cell polarised at a particular potential must depend on the number of water molecules available for oxidation at the metal/electrolyte phase boundary. It is found that equilibration between water in the gas phase and water at this interface (possibly adsorved) is fast, since the cell current responds very rapidly to changes in water vapour pressure in the gas phase.

Note, however the irreversible consumption of $Ag_7I_4AsO_4$ accompanying the water oxidation at the anode. The ionic conductivity of the product phase (microcrystalline $\gamma$-AgI plus $As_2O_5$ hydrate, say

$$Ag_4H_3I_4AsO_4$$

is sufficient to enable the oxidation to continue, but the current response of the cell begins to vary in an unpredictable way. Although this would be unlikely to happen until the cell had given many years service, two techniques are available to extend the useful lifetime of the cell. First, as it is unnecessary to polarise the cell for long periods in order to obtain analytical information, voltage pulse sequences (with variable mark/space ratios) may be used. Second, if application of the sensor is confined to low partial pressures of water (e.g. $\leq 100$ Pa), e.g. by mixing with dry gas or martial evacuation, the cell lifetime is extended about tenfold fo very 100Pa reduction in partial pressure of water.

## Claims

1. A method for sensing fluids which are sources of acidic hydrogen, comprising exposing an electrochemical cell to suspected fluid, applying a potential between the electrodes of the cell and detecting or measuring the current flow,
characterised in that the cell comprises in use a silver cathode, an inert electronically conductive anode and a vitreous silver-iodide/silver-oxymetal-anion electrolyte.

2. A method according to Claim 1, wherein the oxymetal anion is any one or more of tungstate, chromate, molybdate, vanadate, borate, selenate, arsenate and phosphate.

3. A method according to Claim 1 or 2, wherein the fluid being sensed is water, an alcohol or an aldehyde.

4. A method according to Claim 1, substantially as hereinbefore described.

5. An electrochemical cell
Ag|{AgI/Ag-(oxymetal anion)}| inert electrode.

6. A cell according to Claim 5, wherein the oxymetal anion is any one or more of tungstate, chromate, molybdate, vanadate, borate, selenate, arsenate and phosphate.

7. An electrochemical cell substantially as hereinbefore described with reference to and as shown in Figure 1 of the accompanying drawings.

Fig. 1.

Fig. 2

| | DOCUMENTS CONSIDERED TO BE RELEVANT | | EP 90306582.9 |
|---|---|---|---|
| **Category** | Citation of document with indication, where appropriate, of relevant passages | Relevant to claim | CLASSIFICATION OF THE APPLICATION (Int. Cl.5) |
| Y | US - A - 3 821 090 (TOPOL) * Abstract; claims; fig. * | 1,2,5, 6 | G 01 N 27/407 |
| A | | 7 | |
| Y | US - A - 3 798 068 (KUNZE) * Abstract * | 1,2,5, 6 | |
| A | US - A - 3 764 269 (OLDHAM) * Abstract; fig., table I; column 5, lines 19-22 * | 1-7 | |
| A | US - A - 3 798 067 (KUNZE) * Abstract * | 2,6 | |
| A | SOVIET INVENTIONS ILLUSTRATED, Ch section, week 8644, December 10,1986 DERWENT PUBLICATIONS LTD., London, J 04 * SU-1 223-120 (BELORUSSIAN LENIN UNIV) * | 1,3,5 | TECHNICAL FIELDS SEARCHED (Int. Cl.5)  G 01 N H 01 M |
| A | DE - A1 - 3 500 088 (UOP) * Fig. 1 * | 7 | |

The present search report has been drawn up for all claims

| Place of search | Date of completion of the search | Examiner |
|---|---|---|
| VIENNA | 10-10-1990 | NARDAI |

EPO FORM 1503 03.82 (P0401)